(19) Europäisches Patentamt
European Patent Office
Office européen des brevets

(11) EP 1 045 869 B1

(12) **EUROPÄISCHE PATENTSCHRIFT**

(45) Veröffentlichungstag und Bekanntmachung des Hinweises auf die Patenterteilung:
**02.01.2003 Patentblatt 2003/01**

(21) Anmeldenummer: **98962342.6**

(22) Anmeldetag: **16.11.1998**

(51) Int Cl.[7]: **C08F 220/58**, C08F 220/54, C04B 24/16

(86) Internationale Anmeldenummer:
**PCT/EP98/07310**

(87) Internationale Veröffentlichungsnummer:
**WO 99/026991 (03.06.1999 Gazette 1999/22)**

# (54) ZEMENTATIONSHILFSMITTEL

CEMENTATION AUXILIARY AGENT

ADJUVANT DE CEMENTATION

(84) Benannte Vertragsstaaten:
**BE DE ES FR GB IT NL**

(30) Priorität: **25.11.1997 DE 19752093**

(43) Veröffentlichungstag der Anmeldung:
**25.10.2000 Patentblatt 2000/43**

(73) Patentinhaber:
- **Clariant GmbH**
  **65843 Sulzbach (DE)**
- **Sofitech N.V.**
  **1180 Brussels (BE)**
  Benannte Vertragsstaaten:
  **BE DE ES GB IT NL**
- **COMPAGNIE DES SERVICES DOWELL SCHLUMBERGER**
  **92541 Montrouge Cédex (FR)**
  Benannte Vertragsstaaten:
  **FR**

(72) Erfinder:
- **OSWALD, Reinhard**
  **1180 Wien (AT)**
- **FRENZ, Volker**
  **D-55246 Mainz-Kostheim (DE)**
- **TONHAUSER, Jürgen**
  **D-65375 Oestrich-Winkel (DE)**
- **TARDI, Aranka**
  **D-63543 Neuberg (DE)**
- **MAROY, Pierre**
  **F-78530 Buc (FR)**
- **L'ALLORET, Florence**
  **F-75013 Paris (FR)**

(56) Entgegenhaltungen:
**DE-A- 3 302 168** **US-A- 4 515 635**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 045 869 B1

## Beschreibung

Die vorliegende Erfindung bezieht sich auf wasserlösliche Copolymerisate, Verfahren zu deren Herstellung und deren Verwendung als Wasserverlustreduzierer in Zementschlämmen zur Zementation von Tiefbohrungen.

Bei Tiefbohrungen zur Erschließung von Erdöl- und Erdgaslagerstätten ist die Verwendung von Bohrspülungen und Zementschlämmen seit langem bekannt. Nachdem das Bohrloch eine bestimmte Tiefe erreicht hat, werden sog. Futterrohre in das Bohrloch eingebracht. Zu diesem Zweck müssen die Futterrohre fixiert werden, d.h. in den Hohlraum zwischen dem Gebirge und den Futterrohren wird eine Zementschlämme eingepumpt, die zu einem festen Gestein aushärtet. Der sich bildende Zementstein muß undurchlässig für Gase und Flüssigkeiten sein, damit kein Gas und/oder Öl aus dem Trägergestein in andere Abschnitte oder bis an die Oberfläche fließen kann. An den zu verpumpenden Zementschlamm werden hohe Anforderungen gestellt. Er soll gut pumpbar sein, d.h. möglichst niedrig-viskos, und trotzdem keine Entmischung zeigen. Die Wasserabgabe des Zementschlammes an das poröse Gestein während des Pumpvorganges soll niedrig sein, damit sich an der Bohrlochwand keine dicken Filterkuchen bilden, die den Pumpdruck aufgrund der Ringraumverengung so stark erhöhen würden, daß das poröse Gestein aufbricht. Außerdem würde der Zementschlamm bei zu hoher Wasserabgabe nicht optimal abbinden und für Gas und Öl durchlässig werden. Andererseits muß der sich bildende Zementmantel im Ringraum möglichst schnell bestimmte Festigkeiten erreichen und beim Abbinden darf keine Schrumpfung auftreten, die zu Fließkanälen für Gas, Öl und Wasser führt. Eine optimale Einstellung der Eigenschaften des Zementschlammes ist nur durch Additive möglich. Die wichtigsten Additive sind Verzögerer, Beschleuniger, Dispergatoren und Wasserverlustreduzierer.

Als wirksame Wasserverlustreduzierer von Zement- und Gipsschlämmen werden die verschiedensten Polymere, Mischpolymere und Kombinationen davon in der Praxis eingesetzt. Die ersten wirksamen Produkte, die auch heute noch eingesetzt werden, waren Celluloseether auf Basis Hydroxyethylcellulose und Carboxymethylhydroxyethylcellulose. Diese verlieren aufgrund thermischer Instabilität bei Bohrlochtemperaturen über 100°C (212°F) ihre Effizienz. In der Folge wurden viele verschiedene vollsynthetische temperaturstabilisierte Polymere entwickelt und sind heute noch bei den unterschiedlichen Temperaturen und Salinitäten des Zementschlammes im Einsatz.

Polymere als Zusatzmittel zur Reduzierung des Wasserverlustes von Zementschlämmen sind in der Literatur wohlbekannt, wobei bei vielen Wasserverlustreduzierem eine sehr eingeschränkte Aktivität bei hohen Temperaturen besteht.

US-2 614 998 beschreibt die Verwendung von teilweise hydrolysiertem Polyacrylamid ( Poly ( Acrylamid- co - Acrylsäure ) als wasserverlustreduzierendes Polymer. Diese Polymere können allerdings zu starken Verzögerungen auf die Abbindezeit des Zements führen und zeigen nur geringe Wirksamkeit bei hohen Temperaturen.

In US-2 865 876, US-2 905 565 und US-3 052 628 ist die Verwendung sulfonierter Polymere als Additive beschrieben. Die dort beschriebenen Polymere und Copolymere unterscheiden sich in der Zusammensetzung deutlich von dem erfindungsgemäßen Copolymeren und haben keinerlei technische Bedeutung erlangt.

US-5 472 051 beschreibt Copolymere aus AMPS und Acrylsäure mit Molekulargewichten kleiner als 5000 g/mol.

US-4 015 991 beschreibt ein Polymer aus AMPS und Acrylamid, wobei mindestens 20 % der Acrylamideinheiten zur Acrylsäure oder einem Salz der Acrylsäure nachträglich verseift werden muß. Dabei besteht das beanspruchte Copolymer aus AMPS, Acrylamid und Acrylsäure, bzw. einem Salz der Acrylsäure. Somit beansprucht US-4 015 991 folgendes Copolymer:

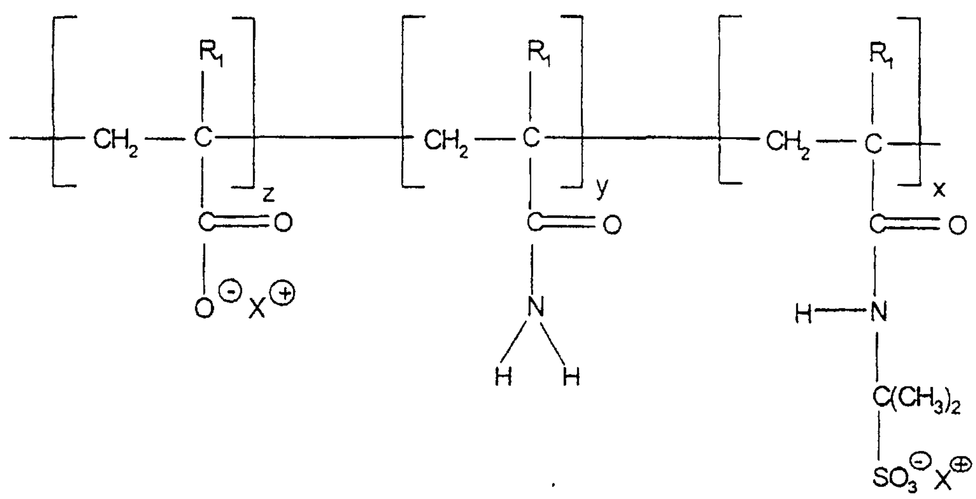

wobei x = 10 - 90 mol Prozent
y = 10 - 90 mol Prozent
z = in Abhängigkeit von y 2 - 90 mol Prozent,
wobei bei z = 0 nicht ausreichende wasserverlustreduzierende Eingeschaften bei dem durchgeführten Test nachgewiesen werden konnte. Der Nachteil dieses Polymeren ist allerdings ein unerwünschter Einfluß auf die Zementeigenschaften (Reduzierung der Zementstein-Festigkeit) und die verzögernde Wirkung auf die Verfestigung des Zementes. Ein weiteres Problem ist der eingeschränkte Temperaturbereich für die Anwendung als wasserverlustreduzierendes Polymer. Bei 176.7°C (350°F) ist es nachweislich nicht aktiv. In US-4 015 991 wurde gezeigt, daß durch wässrige Polymerisation von AMPS und Acrylamid ohne Verseifungsschritt keine anwendungstechnisch geeigneten Copolymere hergestellt werden können.

EP 0116 671 (= DE 3302168) offenbart die Einführung eines weiteren, neuen Comomoneren zu 5 - 60 Gew.-%, der Verwendung von Vinylamiden (z. B. N-Vinyl-Methylacetamid). Dadurch konnte der Hochtemperaturbereich der Anwendung wesentlich erweitert werden, allerdings zeigen diese Polymere schlechtere anwendungstechnische Eigenschaften bei Temperaturen unterhalb einer Temperatur von 38°C (100° F).

US-5 025 040 beschreibt Copolymere aus AMPS, Acrylamid und mindestens 20 % N-Vinylimidazol als neue Vinylamidkomponenten.

US-4 931 489 offenbart Copolymere aus substituierten Acrylamiden und N-Vinylimidazolen ohne die Verwendung von AMPS als Comonomer.

EP-A-0 217 608, US-4 555 269 und EP-A-0157055 beschreiben ein Copolymer aus AMPS und Dimethylacrylamid im molaren Verhältnis 1:4 bis 4:1 als fluid loss-Additiv für salzhaltige ( ungefähr 10 Gew-% ) Zementschlämmen und die Verwendung von AMPS und Acrylsäure in molaren Verhältnis von 1:4 bis 4:1 für den gleichen Zweck.

Nach US-5 294 651 werden die Nachteile des Verfahrens von US-4 015 991 durch eine Verbesserung analog zu EP-A-0 116 671 durch die Verwendung eines weiteren Comonomeren, in diesem Fall zyklischer Vinylamide (z.B. N-Vinylpyrrolidon), überwunden. Der Lösungsvorschlag unterscheidet sich nicht wesentlich von dem in EP-A-0 116 671 aufgezeigten Weg.

Ein anwendungstechnisch befriedigende Lösung für einen Temperaturbereich von 4°C - 205°C (39°F - 400°F) auf der Basis der in US-4 015 991 offenbarten Monomeren, bzw. ohne Teilverseifung des Acrylamids, wurde bislang nicht beschrieben.

Die Vielzahl der entwickelten Polymere zur Reduzierung der Wasserabgabe macht deutlich, daß es stets problematisch ist, einen anwendungstechnisch optimalen Zementschlamm zu formulieren. Einen wesentlichen Einfluß auf dessen Eignung übt dabei die Temperatur des Bohrlochabschnittes aus, der zur Zementation vorbereitet wird. Die auf unterschiedliche Temperaturen abgestimmten Polymere stellen große logistische Probleme dar, weil stets ein bestimmter Vorrat an mehreren wasserverlustreduzierenden Polymeren in weltweit verstreuten Lokationen vorgehalten werden muß. Die Aufgabe bestand somit darin, Polymere zu entwickeln, welche den gesamten Temperaturbereich (4°C - 205°C) abdecken können, und für die unterschiedlichsten Zementschlämme, d.h. verschiedene Zementqualität, Salinität des Anmischwassers und Zementschlamm-Dichte, geeignet sind.

Überraschenderweise wurde nun gefunden, daß die geforderten anwendungstechnischen Eigenschaften durch ein AMPS-Acrylamid-Copolymer erreicht werden können, wenn das Polymerisationsverfahren geändert und auf

die nachträgliche Verseifung verzichtet wird und somit ein neues, bislang nicht beschriebenes Polymer herstellt wird. Dieses Polymer hat außerdem unterhalb von 40°C keine abbindeverzögernden Eigenschaften.

Gegenstand der vorliegenden Erfindung sind Copolymere mit einem k-Wert von 100 bis 300, gemessen in 0,5 Gew.-% Lösung in destilliertem Wasser bestehend aus

(a) 1 - 99 Gew- % Struktureinheiten der Formel (1)

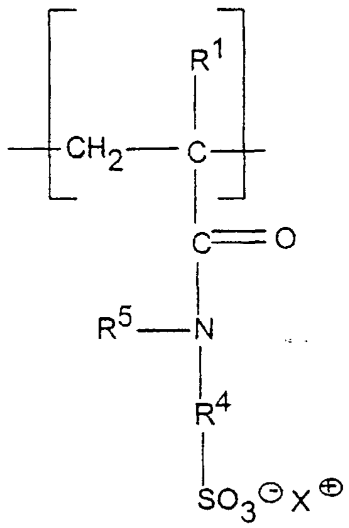

(1)

wobei $R^1$= Wasserstoff oder Methyl, $R^4$ = C, -$C_{22}$ Alkylen, $R^5$ = $C_1$-$C_{22}$-Alkyl oder Wasserstoff und X = Ammonium, Lithium, Natrium, Kalium, ein Amin oder ein Gemisch dieser Substanzen bedeuten und

(b) 99 - 1 Gew % Struktureinheiten der Formel (2)

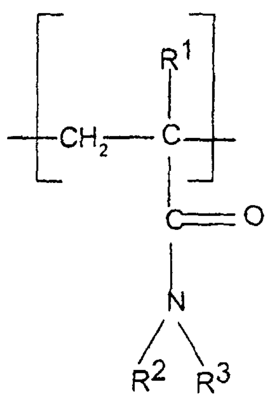

(2)

wobei $R^1$ = Wasserstoff oder Methyl, $R^2$ und $R^3$ unabhängig voneinander Wasserstoff oder $C_2$-$C_{22}$-Alkyl bedeuten, dadurch gekennzeichnet, daß Komponente b) nicht hydrolysiert ist, und daß die Copolymeren durch eine Lösungs-Fällungspolymerisation in einem nichtwässrigen Lösungsmittel oder einem wassermischbaren, organischen Lösungsmittel mit geringem Wassergehalt, welches ein Fällungsmittel für das Copolymer darstellt, hergestellt wurden.

$R^2$ und $R^3$ bedeuten vorzugsweise Wasserstoff. $R^4$ bedeutet vorzugsweise $C_2$-$C_{10}$-Alkylen, insbesondere $C_3$-Alkylen. $R^5$ bedeutet vorzugsweise Wasserstoff oder Methyl. Speziell werden die folgenden Substituenten verwendet:

$X^+$=$NH_4^+$ oder $Na^+$,
$R^1$=H, $R^5$=H und $R^4$=-$C(CH_3)_2$-$CH_2$-,
$R^1$=$CH_3$, $R^5$=H und $R^4$= -$C(CH_3)_2$-$CH_2$-,

$R^1$, $R^2$ und $R^3$=H,
$R^1$ und $R^2$=H, $R^3$= $-C(CH_3)_3$,
$R^1$=$CH_3$, $R^2$ und $R^3$=H, oder
$R^1$ und $R^2$=H, $R^3$= $-C(CH_3)_3$.

Die Molekulargewichtsmittel dieser Polymere betragen vorzugsweise 10.000 bis 10.000.000 g/mol, bevorzugt 500.000 bis 5.000.000, insbesondere 1.000.000 bis 4.000.000 g/mol. Als Indikator für das Molekulargewicht dienen die relative Viskosität bzw. der k-Wert. Zur Bestimmung des k-Werts wird das Copolymer in einer bestimmten Konzentration (meist 0,5 %) gelöst und mittels Ubbelohde-Kapillar-Viskosimeter die Ausflußzeit bei 25°C ermittelt. Dieser Wert ergibt die absolute Viskosität der Lösung ($\eta_c$) Die absolute Viskosität des Lösemittels ist $\eta_o$. Das Verhältnis beider absoluten Viskositäten ergibt die relative Viskosität

$$z = \frac{\eta_c}{\eta_o}$$

aus den relativen Viskositäten der Funktion der Konzentration kann der k-Wert mittels folgender Gleichung ermittelt werden:

$$\mathrm{Lg}\, z = \left( \frac{75 \cdot k^2}{1 + 1.5\, kc} + k \right) c$$

Der k-Wert der erfindungsgemäßen Polymere beträgt von 100 bis 300, vorzugsweise von 150 bis 270 und insbesondere von 180 bis 250.

Die Menge an Struktureinheiten der Formel (1) beträgt vorzugsweise von 10 bis 90 Gew.-%, insbesondere 30 bis 70 Gew.-%. Die Menge an Struktureinheiten der Formel (2) beträgt vorzugsweise 90 bis 10 Gew.-%, insbesondere 70 bis 30 Gew.-%.

Eine wie in US-4 015 991 beschriebene nachträgliche Verseifung ist für die anwendungstechnischen Eigenschaften nicht vorteilhaft (siehe Beispiele 1 - 7, Tabelle 1 und 2), um eine möglichst breite Anwendung von 4°C - 205°C (39°F - 400°F) als Wasserverlustreduzierer zu erhalten. Es wurde sogar gefunden, daß eine nachträgliche Teilverseifung zu nachteiligen anwendungstechnischen Eigenschaften bei niedrigen Temperaturen in Form einer Verlängerung der Zementabbindezeit führt, und daß bei hohen Temperaturen über 120°C (250°F) der Wasserverlust schwer zu kontrollieren ist. Die neuen Polymere können als Wasserverlustreduzierer zwischen 4°C und 205°C in Bohrlochflüssigkeiten, insbesondere in Zementschlämmen und wasserbasischen Bohrspülungen, verwendet werden. Ihre Wirksamkeit ist auch bei 4°C und 205°C gewährleistet. Das Polymer kann im trockenen Zustand mit anderen pulverförmigen Additiven gemischt werden. Es kann aber auch gelöst zusammen mit anderen flüssigen Additiven dem Anmischwasser zugegeben werden.

Die Herstellung der Copolymeren erfolgt durch eine Lösungs-Fällungspolymerisation (siehe: H.G. Elias, Makromoleküle, Struktur-Eigenschaften-Synthese-Stoffe, Hüthig & Wepf Verlag, 1972, Seite 487). Dabei sind die Monomeren im Polymerisationsmedium ganz oder teilweise löslich, das Polymere ist hingegen unlöslich. Die Umsetzung kann bei Temperaturen zwischen -10 und 100 °C, vorzugsweise zwischen 20 und 70 °C durchgeführt werden.

Als Polymerisationsinitiatoren kommen alle radikalbildenden Substanzen in Frage, neben typischen Diazoverbindungen und Perverbindungen ist auch eine Initiierung durch ein Redoxstarter, einen Photoinitiator oder durch energiereiche Strahlung (UV, Neutronen, Plasma) möglich. Der Wassergehalt der hier eingesetzten Lösemittel sollte vorzugsweise 10 %, insbesondere 5 % nicht übersteigen. Im Gegensatz zur wässrigen, radikalischen Polymerisation findet man nur eine untergeordenete Abhängigkeit des Produktes von der Art und Menge des verwendeten Initiatorsystems.

Bevorzugte Beispiele für die Verbindungen, von denen sich die Struktureinheiten der Formel 1 ableiten, sind Acrylamido-2-methylpropansulfonsäure oder Methacrylamido-2-methylpropansulfonsäure. Bevorzugte Beispiele für die Verbindungen, von denen sich die Struktureinheiten der Formel 2 ableiten, sind Acrylamid, Methacrylamid, Isopropylacrylamid und tert.-Butylacrylamid.

Die Polymere fallen als weißer, voluminöser Niederschlag in tert. Butanol an. Zur Isolierung des Polymeren können alle üblichen Verdampfungs-, Trocknungsund Isolierungsprozesse verwendet werden. Insbesonders kann das Butanol durch eine Druckfiltration oder Destillation vom Produkt abgetrennt werden. Ein geringer Rückstand an tert.

Butanol ist weder aus sicherheitstechnischen noch aus anwendungstechnischen Gründen bedenklich.

Ein weiterer Gegenstand der Erfindung ist ein Verfahren zur Zementation von Tiefbohrungen unter Verwendung einer Zementschlämme, welche das erfindungsgemäße Copolymer in einer Konzentration von 0.01 - 5% bwoc (by weight of cement) vorzugsweise 0,05 bis 0,9 % bwoc enthält. Weitere Komponenten der Zementschlämme sind Wasser unterschiedlicher Salinität und Zement. Außerdem können Dispergatoren, Verzögerer, Beschleuniger, Extender, Entschäumer oder Silikatderivate als Hilfsadditive verwendet werden.

Ein weiterer Gegenstand der Erfindung ist die Verwendung der erfindungsgemäßen Copolymere in wasserbasierenden Bohrflüssigkeiten. Diese Bohrflüssigkeit können neben den erfindungsgemäßen Copolymeren weitere Additive enthalten. Solche Additive sind beispielsweise Bentonite, Tonstabilisatoren, Lignin-/Lignosulfonate, pH-Stabilisatoren (z.B. Hydroxide), Temperaturstabilisatoren (z.B. Monoethanolamin oder sulfonierte synthetische Polymere) und Barit (zur Einstellung der gewünschten Dichte).

Die folgenden Beispiele beschreiben die Ausführung der Erfindung näher.

Beispiele

Die ersten vier Beispiele beschreiben typische Herstellverfahren für das erfindungsgemäße Polymer. In den Beispielen wurde das Gegenion und die Copolymerzusammensetzung variiert. Bei den ersten vier Beispielen konnten durch analytische und spektroskopische Verfahren keine signifikanten Mengen von Acrylsäure oder Acrylaten festgestellt werden ( Verseifungsprodukt des Acrylamid). Erwartungsgemäß hat bei diesen Temperaturen und pH - Werten keine Verseifung von Acrylamid stattgefunden (siehe auch Beispiel 7). Die anwendungstechnisch nachgewiesene Wirkung ist daher auf das Poly-(AMPS-co-Acrylamid) zurückzuführen.

Beispiel 1

Copolymerisat aus 70 Gew-% AMPS und 30 Gew - % AM, Ammoniumsalz

In einem 3 Liter Quickfitkolben mit Ankerrührer, Rückflußkühler mit Abgaswäscher, kombiniertes Thermometer / pH Meter und einem Gaseinleitungsrohr werden 1700 g rektifiziertes tert. Butanol vorgelegt und mit 50 ml destilliertem Wasser versetzt. Das Reaktionsgefäß befindet sich in einem Heizbadthermostaten.

Dieses Reaktionsgefäß wird mit Stickstoffgas überschichtet und im leichten Stickstoffgegenstrom 245 g Acrylamido-2-methylpropansulfonsäure AMPS 2404® (eingetragene Marke der Lubrizol) eingetragen. Das AMPS löst sich im tert. Butanol nicht vollständig auf und liegt teilweise als Feststoffdispersion vor. Der pH-Wert dieses Gemisches liegt unterhalb von 1. Durch das Gaseinleitungsrohr wird oberhalb der flüssigen Phase gasförmiges Ammoniak eingeleitet bis der pH-Wert der Dispersion zwischen 7 und 8 liegt. Nach Erreichen des gewünschten pH-Wert Bereichs wird noch 1 Stunde nachgerührt und der pH-Wert kontinuierlich erfaßt. Das Reaktionsgefäß wird wieder mit Stickstoff überschichtet und es werden 105 g Acrylamid eingetragen. Nach Eintrag des Acrylamids wird erneut der pH-Wert kontrolliert und gegebenfalls in den Bereich pH 7-8 korrigiert. Es wird für mindestens 1 Stunde ein konstanter Stickstoffstrom durch die Lösung geleitet. Nach dieser Inertisierungszeit wird der Restsauerstoffgehalt durch eine Sauerstoffelektrode überprüft. Sollte der gemessene Wert an Restsauerstoff in der flüssigen Phase den Wert von 1 ppm übersteigen, muß erneut inertisiert werden bis dieser Wert erreicht wird. Danach werden im leichten Stickstoffstrom 1,5 g AIBN zugegeben und der Reaktionskessel auf 60 °C erwärmt. Kurz nach Erreichen einer Innentemperatur von 60 °C wird das Einleiten von Stickstoffgas beendet und die Polymerisationsreaktion startet typischerweise nach einigen Minuten, was durch eine Temperaturerhöhung 10 - 15 °C festgestellt werden kann. Ungefähr 30 Minuten nach Einsetzen der Polymerisationsreaktion ist das Temperaturmaximum überschritten und die Temperatur im Reaktionsgefäß wird durch das Heizbad bis zum Siedepunkt des tert.

Butanols erhöht. Unter leichtem Rückfluß wird die nun viskose Masse zwei Stunden nachgerührt.

Das Reaktionsprodukt, welches als viskose Suspension von Polymeren im tert. Butanol vorliegt, wird durch Abfiltrieren des tert. Butanols und anschließender Trocknung im Vakuumtrockenschrank abgetrennt.
Ausbeute: 365 g Polymer 1
Ammoniumsalz von Poly (Acrylamido-2-methylpropansuifonsäure-co-Acrylamid) Trockengehalt: 96 Gew.-% (2,5 % tert. Butanol, 1,5 % Wasser)
k-Wert einer 0,5 Gew.-% Lösung: 212

Beispiel 2:

Copolymerisat aus 70 Gew-% AMPS und 30 Gew - % AM, Natriumsalz

Das Polymer wird analog dem Beispiel 1 hergestellt. Anstelle der Zugabe von einer entsprechenden Menge

Ammoniak werden 140.5 g Natriumcarbonat nach Zugabe des AMPS zudosiert. Der pH-Wert der Dispersion liegt danach im Bereich zwischen 7 und 8. Ausbeute: 380 g Polymer 2 Natriumsalz von Poly (Acrylamido-2-methylpropansulfonsäure-co-Acrylamid)
Trockengehalt: 94 Gew.-%
k-Wert einer 0,5 Gew.-% Lösung: 207

Beispiel 3:

Copolymerisat aus 60 Gew-% AMPS und 40 Gew - % AM, Ammoniumsalz

Das Polymer wird analog dem Beispiel 1 hergestellt.
Anstelle der in Beispiel 1 angegebenen Mengen werden 210 g AMPS 2404 und 140 g Acrylamid verwendet.
Ausbeute: 362 g Polymer 3
Ammoniumsalz von Poly ( Acrylamido-2-methylpropansulfonsäure-co-Acrylamid) Trockengehalt: 97 Gew.-% (2,5 % tert. Butanol, 1,5 % Wasser)
k-Wert einer 0,5 Gew.-% Lösung: 210

Beispiel 4:

Copolymerisat aus 80 Gew-% AMPS und 20 Gew - % AM, Ammoniumsalz

Das Polymer wird analog dem Beispiel 1 hergestellt.
Anstelle der in Beispiel 1 angegebenen Mengen werden 280 g AMPS 2404 und 70 g Acrylamid verwendet.
Ausbeute: 368 g Polymer 4
Ammoniumsalz von Poly (Acrylamido-2-methylpropansulfonsäure-co-Acrylamid) Trockengehalt: 94 Gew.-% (2,5 % tert. Butanol, 1,5 % Wasser)
k-Wert einer 0,5 Gew.-% Lösung: 205

An Analogie zu US-4 015 991 wurde eine Teilverseifung des Produktes durchgeführt. Dabei sollen die anwendungstechnischen Eigenschaften des Produktes vor und nach der Verseifung verglichen werden. Die anwendungstechnische Ausprüfung macht dabei deutlich, daß die nachträgliche Teilverseifung des Produktes keine Vorteile bietet, das Verfahren aber deutlich aufwendiger und teurer macht.
In Beispiel 7 wird der Effekt des Auflösens und der anschließenden Walzentrocknung untersucht. Beide Verfahrensschritte führen nicht zu einer Änderung des erfindungsgemäßen Polymeren.

Beispiel 5:

Kontrollierte Hydrolyse des in Beispiel 1 hergestellten Polymeren

50 g des Polymeren 1 werden in 1500 ml destilliertem Wasser unter Rühren gelöst. Nach vollständigem Auflösen des Polymeren gibt man 6,3 g Kaliumhydroxid zu, welches zuvor in 20 ml Wasser aufgelöst wurde. Die Mischung wird auf 60°C erhitzt und eine Stunde bei dieser Temperatur gerührt. Das Produkt wird mit Hilfe eines Walzentrockners getrocknet. Durch das Verfahren werden 50 % des Acrylamids zu Acrylsäure hydrolisiert.

Beispiel 6

Kontrollierte Hydrolyse des in Beispiel 1 hergestellten Polymeren

50 g des Polymeren 1 aus Beispiel 1 werden in 1500 ml destilliertem Wasser unter Rühren gelöst. Nach vollständigem Auflösen des Polymeren gibt man 3,8 g Kaliumhydroxid in welches zuvor in 20 ml Wasser aufgelöst wurde. Die Mischung wird auf 60 °C erhitzt und eine Stunde bei dieser Temperatur gerührt. Das Produkt wird mit Hilfe eines Walzentrockners getrocknet. Durch das Verfahren werden 30 % des Acrylamids zu Acrylsäure hydrolisiert

Beispiel 7

Überprüfung der Verseifungsreaktion und Trocknungsbedingungen

Das Polymer wird analog zu Beispiel 1 hergestellt, 50 g des Polymeren werden in 1500 ml destilliertem Wasser unter Rühren gelöst. Die Mischung wird auf 60 °C erhitzt und eine Stunde bei dieser Temperatur gerührt. Das Produkt

wird mit Hilfe eines Walzentrockners getrocknet. Es hat keinerlei Hydrolyse stattgefunden.

Wesentlich für eine erfolgreiche anwendungstechnische Ausprüfung ist auch ein möglichst hohes Molekulargewicht. Die direkte Messung des absoluten Molekulargewichts ist nicht trivial, da z.B. die Gelpermeationschromatographie wie viele andere Verfahren eine vergleichende Methode ist, die auf der Verwendung von einheitlichen Polymerstandards beruht. Solche Modellsubstanzen sind für diese Systeme durch anionische Polymerisation nicht herstellbar. Daher wurde die relative Viskosität als ein Maß für das Molekulargewicht verwendet. Bei dem vorliegenden Verfahren können zu niedrige Molekulargewichte durch eine Verunreinigung sehr leicht auftreten. Dabei sind vor allem solche Verunreinigungen von Belang, die eine hohe Radikalkettenübertragungskonstante besitzen, wie z. B. Aldehyde und Oxime, aber auch Schwermetallverunreinigungen oder Sauerstoff. Eine solche Verunreinigung wird durch die Zugabe von Dodecylmercaptan simuliert, welches bekanntlich eine relativ große Radikalkettenübertragungskonstante besitzt. Solche Verbindungen können bereits im ppm Bereich die Polymerisation erheblich stören. Die Beispiele dienen der Überprüfung einer mindestens erforderlichen relativen Viskosität ( untere Molekulargewichtsgrenze ), um die gewünschten Eigenschaften zu liefern. In Beispiel 8 und 9 wurden solche niedermolekularen Polymere hergestellt.

Beispiel 8

Copolymerisat aus 70 Gew-% AMPS und 30 Gew - % AM, Ammoniumsalz

Das Polymer wird analog zu Beispiel 1 hergestellt.
Vor der Zugabe des AIBN werden 0.035 g Dodecylmercaptan zugesetzt.
Die Substanz ist in Butanol löslich und besitzt eine hohe Radikalkettenübertragungskonstante.
Ausbeute: 362 g Polymer 7
Ammoniumsalz von Poly-(Acrylamido-2-methylpropansulfonsäure-co-Acrylamid) Trockengehalt: 95 Gew.-%
k-Wert einer 0,5 Gew.-% Lösung: 169

Beispiel 9

Copolymerisat aus 70 Gew.-% AMPS und 30 Gew.-% AM, Ammoniumsalz

Das Polymer wird analog zu Beispiel 1 hergestellt.
Vor der Zugabe des AIBN werden 0,07 g Dodecylmercaptan zugesetzt.
Die Substanz ist in Butanol löslich und besitzt eine hohe Radikalkettenübertragungskonstante
Ausbeute: 369 g Polymer 1
Ammoniumsalz von Poly-(Acrylamido-2-methylpropansulfonsäure-co-Acrylamid)
Trockengehalt: 93 Gew.-% (2,5 % tert. Butanol, 1,5 % Wasser )
k-Wert einer 0,5 Gew.-% Lösung: 148

In den ersten Beispielen konnte demonstriert werden, daß die Lösungs-Fällungspolymerisation in organischen Lösungsmitteln ein geeignetes Verfahren darstellt, um wasserverlustreduzierende Polymere herzustellen. Zum Vergleich der anwendungstechnischen Eigenschaften dieser neuen Polymere wurde die in US-4 015 991 beschriebene Verbindung hergestellt und ausgeprüft:

Vergleichsbeispiel 1

(nicht erfindungsgemäß, hergestellt gemäß US-4 015 991 Copolymerisat hergestellt in einer wässrigen Gelpolymerisation 88 Gew.-% AMPS, 12 Gew.-% Acrylamid)

In einem 2 Liter Quickfitkolben mit Ankerrührer, Rückflußkühler mit Abgaswäscher, kombiniertes Thermometer / pH Meter und einem Gaseinleitungsrohr werden 328 g destilliertes und entgastes Wasser vorgelegt und 116,4 g Acrylamido-2-methylpropansulfonsäure AMPS 2404® zugegeben. Das AMPS wird durch Zugabe von 45 g einer 50 % Lösung von Natronlauge (NaOH) neutralisiert. Nach der Neutralisationsreaktion erhält man eine klare Lösung mit einem pH-Wert zwischen 7 und 8. In der so neutralisierten Lösung löst man 14,7 g Acrylamid langsam auf. Durch die Reaktionslösung wird wieder 1 Stunde Stickstoffgas durchgeleitet. Danach werden 0.69 g tert. Butylperoxypivalat und 1,0 ml einer Eisenammoniumsulfatlösung als Redoxstarterpaar zugegen. Die Eisenammoniumsulfatlösung wird durch Auflsen von 0.098g $Fe(NH_4)_2(SO_4)_2$ in 500 g Wasser hergestellt. Diese Mischung wird weiterhin bei Raumtemperatur gerührt bis nach 1-2 Stunden eine Polymerisationsreaktion eintritt. Durch die exotherme Polymerisationsreaktion erhöht sich bei adiabatischer Polymerisation die Temperatur auf 50 - 60 °C. Nach Durchlaufen des Temperaturmaximums wird die Innentemperatur durch den Thermostaten auf 60 °C eingestellt. Es bildet sich ein klares, hochviskoses Gel aus. Das Gel wird mechanisch zerkleinert auf einem Walzentrockner getrocknet.

Ausbeute: 149 g Vergleichspolymer 1
Natriumsalz von Poly-(Acrylamido-2-methylpropansulfonsäure-co-Acrylamid)

Dieses Grundpolymer sollte gemäß der Ausprüfung nur schlechte wasserverlustreduzierende Wirkung besitzen. Dagegen sollen bei niedriger Temperatur 28°C (100° F) die teilverseiften Produkte gute anwendungstechnische Eigenschaften besitzen. Diese Produkte wurde wie im Vergleichsbeispiel 2 und 3 hergestellt und ausgeprüft.

Vergleichsbeispiel 2

(nicht erfindungsgemäß, hergestellt gemäß US-4 015 991)

Kontrollierte Hydrolyse des in Vergleichsbeispiel 1 hergestellten Polymeren

45,3 g des Vergleichspolymeren 1 werden in 1500 ml destilliertem Wasser unter Rühren gelöst. Nach vollständigem Auflösen des Polymeren gibt man 1.68 g Kaliumhydroxid in welches zuvor in 20 ml Wasser aufgelöst wurde. Die Mischung wird auf 60 °C erhitzt und eine Stunde bei dieser Temperatur gerührt. Das Reaktionsprodukt wird wieder mit Hilfe eines Walzentrockners getrocknet. Damit wird eine 50 % Hydrolyse des Acrylamids erreicht.

Vergleichsbeispiel 3

(nicht erfindungsgemäß, hergestellt gemäß US-4 015 991)

Kontrollierte Hydrolyse des in Vergleichsbeispiel 1 hergestellten Polymeren

Die Hydrolyse wird analog dem Vergleichsbespiel 2 durchgeführt.
Es wird allerdings die reduzierte Menge von 1,0 g KOH verwendet.
Damit wird eine 30 % Hydrolyse des Acrylamids erreicht erreicht.

Durch analytische und spektroskopische Verfahren konnten Acrylsäurefunktionalitäten (Acrylsäure oder deren Salze) in der richtigen Größenordnung nachgewiesen werden.

Beispiele - Testergebnisse

Die Ausprüfung erfolgt gemäß API spec. 10. Im atmosphärischen Konsistometer wird der Zementschlamm bei Untersuchungstemperatur gerührt/konditioniert und dann bei gleicher Temperatur die Rheologie mit dem FANN Viskosimeter Modell 35SA (bei Hochtemperatur wird bei 93° C konditioniert und Viskosität gemessen) und der Wasserverlust bei unter 120°C mit der Baroid HTHP Filterpresse bzw. bei über 120°C mit dem Stirring Fluid Loss Test Apparatus gemessen. Die Abbindezeiten wurden mit einem HTHP Konsistometer ermittelt.

Tabelle 1 zeigt die wasserverlustreduzierenden Eigenschaften von o.g. Beispielen laut API spec. 10 bei 35° C (95° F) im statischen Filtrationstest in der Baroid HTHP Filterpresse. Deutlich wird dabei, daß mit den erfindungsgemäßen Copolymeren eine sehr gute Wasserverlustreduzierung bei niedrigen Temperaturen erzielt werden kann. Natürlich reduzieren bei diesen niedrigen Temperaturen auch die in US-4 015 991 beanspruchten Polymere auf Basis teil-hydrolysiertes Acrylamid-AMPS (= Copolymer aus Acrylsäure-Acrylamid-AMPS), nachgestellt in Vergleichsbeispiel 2 und 3, den Wasserverlust. Aus Tabelle 1 wird jedoch der negative Einfluß auf die Abbindezeit recht deutlich. Vergleichsbeispiel 1 bestätigt den in US-4 015 991 gefundenen Sachverhalt, daß eine Teilverseifung von Acrylamid-co-AMPS Polymeren im wässrigen Polymerisationsverfahren notwendig ist, um den Wasserverlust von Zementschlämmen in adäquaten, praktisch verwertbaren Grenzen (< 100 ml/30 min) bei niedrigen Temperaturen halten zu können.

Die erfindungsgemäßen Polymere haben keinen Einfluß auf die Abbindezeit der Zementschlämme, solange nicht gemäß US-4 015 991 nachträglich das Acrylamid teilverseift wurde. Beispiel 5 und Beispiel 6 stellen erfindungsgemäße Copolymere, welche nachträglich teilverseift wurden, dar. Die Teilverseifung wirkt sich sofort negativ auf eine unerwünschte Verlängerung der Abbindezeit aus. Beispiel 7 macht deutlich, daß es bei o.g. Polymersationsbedingungen zu keiner Teilverseifung des Acrylamid kommt. Beispiele 8 und 9 machen den Einfluß des bevorzugten Molekulargewichtsbereiches (k-Wert) deutlich.

| | |
|---|---|
| Formulierung der Zementschlämme: | 15.8 ppg Dyckerhoff G |
| | 0.3% bwoc Polymer |
| | 0.065 gal/sk PNS |
| | 0.05 gal/sk anti-foaming agent |

Tabelle 1

| Copolymer | k-Wert | Konz. [% bwoc] | Temp. [° C] | Fließgrenze [lb/100ft$^2$] | plast. Viskosität [cp] | Wasserverlust [ml/30 min] | Abbindezeit 100 BC [h : min] |
|---|---|---|---|---|---|---|---|
| Beispiel 1 | 212 | 0.3 | 35 | 6 | 75 | 40 | 4:30 |
| Beispiel 2 | 207 | 0.3 | 35 | 4 | 90 | 55 | 4:20 |
| Beispiel 3 | 210 | 0.3 | 35 | 10 | 92 | 45 | 4:40 |
| Beispiel 4 | 205 | 0.3 | 35 | 7 | 83 | 35 | 4:15 |
| Beispiel 5 | 212 | 0.3 | 35 | 9 | 95 | 35 | 5:45 |
| Beispiel 6 | 212 | 0.3 | 35 | 11 | 99 | 32 | 5:30 |
| Beispiel 7 | 212 | 0.3 | 35 | 7 | 73 | 39 | 4:32 |
| Beispiels 8 | 169 | 0.3 | 35 | 3 | 65 | 120 | 4:30 |
| Beispiel 9 | 148 | 0.3 | 35 | 2 | 60 | 220 | 4:20 |
| Vergleichsbeispiel 1 | 212 | 0.3 | 35 | 5 | 75 | 520 | 4:00 |
| Vergleichsbeispiel 2 | 212 | 0.3 | 35 | 6 | 70 | 120 | 6:30 |
| Vergleichsbeispiel 3 | 212 | 0.3 | 35 | 8 | 77 | 140 | 6:20 |

% bwoc — Konzentration "by weight of cement", d.h. auf das Gewicht des Zements bezogen

BC — "Bearden Units of Consistency", d.h. dimensionslose Größe für die Konsistenz der Zementschlämme

Fließgrenze, plastische Viskosität und Wasserverlust beziehen sich auf den konditionierten Zementschlamm bei 35°C.

Tabelle 2 zeigt die wasserverlustreduzierenden Eigenschaften von o.g. Beispielen laut API spec. 10 bei 176° C (350° F) im Stirring Fluid Loss Test Apparatus. Deutlich wird dabei, daß mit den erfindungsgemäßen Copolymeren eine sehr gute Wasserverlustreduzierung auch bei hohen Temperaturen erzielt werden kann. Bei diesen hohen Temperaturen reduzieren die in US-4 015 991 beanspruchten Polymere auf Basis teil-hydrolysierten Acrylamid-AMPS (= Copolymer aus Acrylsäure-Acrylamid-AMPS) den Wasserverlust nicht mehr in ausreichender, d.h. wirschaftlicher Weise (Vergleichsbeispiel 1, 2 und 3).

Formulierung der Zementschlämme:
15.8 ppg Dyckerhoff G
0.7% bwoc polymer
0.20 gal/sk PNS
1.5 gal/sk HT Retarder
35% bwoc silica flour
0.05 gal/sk anti-foaming agent

Tabelle 2

| Copolymer | k-Wert | Konz. [% bwoc] | Temperatur [° C] | Fließgrenze [lb/100ft$^2$] | plast. Viskosität [cp] | Wasserverlust [ml/30 min] |
|---|---|---|---|---|---|---|
| Beispiel 1 | 212 | 0.7 | 176 | 3 | 89 | 38 |
| Beispiel 2 | 207 | 0.7 | 176 | 2 | 100 | 55 |
| Beispiel 3 | 210 | 0.7 | 176 | 5 | 110 | 35 |

Tabelle 2 (fortgesetzt)

| Copolymer | k-Wert | Konz. [% bwoc] | Temperatur [° C] | Fließgrenze [lb/100ft$^2$] | plast. Viskosität [cp] | Wasserverlust [ml/30 min] |
|---|---|---|---|---|---|---|
| Beispiel 4 | 205 | 0.7 | 176 | 7 | 93 | 35 |
| Beispiels 5 | 212 | 0.7 | 176 | 2 | 83 | 100 |
| Beispiel 6 | 212 | 0.7 | 176 | 9 | 105 | 90 |
| Beispiel 7 | 212 | 0.7 | 176 | 4 | 85 | 36 |
| Beispiels 8 | 169 | 0.7 | 176 | 4 | 60 | 250 |
| Beispiel 9 | 148 | 0.7 | 176 | 1 | 55 | 370 |
| Vergleichsbeispiel 1 | 207 | 0.7 | 176 | 5 | 75 | 760 |
| Vergleichsbeispiel 2 | 207 | 0.7 | 176 | 7 | 140 | 660 |
| Vergleichsbeispiel 3 | 207 | 0.7 | 176 | 12 | 130 | 870 |

% bwoc Konzentration "by weight of cement", d.h. auf das Gewicht des Zements bezogen
BC "Bearden Units of Consistency", d.h. dimensionslose Größe für die Konsistenz der Zementschlämme

Fließgrenze, plastische Viskosität beziehen sich auf den konditionierten Zementschlamm bei 93°C (200° F). Wasserverlust wurde bei 176°C (350° F) ermittelt.

Tabelle 3 zeigt die wasserverlustreduzierenden Eigenschaften der erfindungsgemäßen Polymere über einen weiten Temperaturbereich (4°C bis 205°C) in Zementschlämmen unterschiedlicher Dichte, Salinität und basierend auf Zementqualitäten unterschiedlicher Herkunft. Die universelle Einsetzbarkeit der erfindungsgemäßen Polymere stellt einen wichtigen Beitrag zur Vereinfachung der weltweit eingesetzten Zementschlamm-Formulierungen dar. Die Zementschlämme wurden in einem dem Fachmann bekannten, gemäß API spec. 10 standardisierten, Verfahren hergestellt und ausgeprüft und beinhalten neben den wasserverlustreduzierenden Polymeren weitere, dem Fachmann geläufige Additive, welche zur Einstellung einer optimalen Zementschlämme standardmäßig verwendet werden. Es bedeuten

% bwoc Konzentration "by weight of cement", d.h. auf das Gewicht des Zements bezogen
ppg Dichte der Zementschlämme , "pound per gallon" = 0.1198 kg/l
gal/sk Konzentration, "gallons per sack", d.h. 1 Gallone(=3.785 Liter) flüssiges Additiv pro Sack Zement (entspricht 8,879 l/100 kg Zement)
PNS Polynaphthalene Sulfonate
PMS Polymelamine Sulfonate

Tabelle 3

| Temp. | 4°C (39°F) | 28°C 80°F | 28°C 80°F | 28°C 80°F | 38°C 100°F | 71°C 160°F | 93°C 200°F | 93°C 200°F | 121°C 250°F | 149°C 300°F | 176°C 350°F | 176°C 350°F | 205°C 400°F |
|---|---|---|---|---|---|---|---|---|---|---|---|---|---|
| Zement | G | H | H | G | Raysut | H | H | Saudi | H | H | H | G | H |
| Dichte [ppg] [kg/l] | 12 | 13 1.56 | 16.2 1.94 | 15.8 1.89 | 15.8 1.89 | 13 1.56 | 16.2 1.94 | 15.8 1.89 | 16.2 1.94 | 16.2 1.94 | 18.5 2.22 | 15.8 1.89 | 16.2 1.94 |
| Anmischwasser | Süßw | Süßw | Süßw | Süßw | Salz | Meer | Süßw | Süßw | Süßw | Süßw | Süßw | Süßw | Süßw |
| Copolymer, % bwoc | 0.27 | 0.50 | 0.30 | 0.30 | 0.17 | 0.70 | 0.40 | 0.35 | 0.40 | 0.50 | 0.55 | 0.60 | 0.70 |
| PNS, % bwoc | 0.26 | - | 0.65 | 0.45 | 0.80 | - | 0.50 | 0.70 | 0.05 | 0.40 | 0.40 | 0.25 | 0.90 |
| PMS, gal/sk | - | 0.40 | - | - | - | 0.35 | - | - | - | - | - | - | - |
| $CaCl_2$ , % bwoc | 1.36 | | | 0.75 | - | | | - | - | | | - | |
| Bentonit, % bwoc | 35.7 Extender | 2.0 | - | - | - | - | - | - | - | - | - | - | - |
| Lignosulfonat, % bwoc | - | - | - | - | - | - | 0.22 | 0.25 | - | - | - | - | - |
| Na-Silikat, gal/sk | - | - | - | - | - | 0.45 | - | - | - | - | - | - | - |
| Synth. Verzögerer, gal/sk | - | - | - | - | - | - | - | - | - | 0.75 | - | 1.0 | 0.90 |
| Lignin Derivat, % bwoc | - | - | - | - | - | - | - | - | 0.20 | - | 1.2 | - | - |
| Silica % bwoc | - | - | - | - | - | - | - | - | 35 | 35 | 35 | 35 | 35 |

| Temp. | 4°C (39°F) | 28°C 80°F | 28°C 80°F | 28°C 80°F | 38°C 100°F | 71°C 160°F | 93°C 200°F | 93°C 200°F | 121°C 250°F | 149°C 300°F | 176°C 350°F | 176°C 350°F | 205°C 400°F |
|---|---|---|---|---|---|---|---|---|---|---|---|---|---|
| Entschäumer, gal/sk | 0.05 | 0.05 | 0.05 | 0.05 | 0.05 | 0.05 | 0.05 | 0.05 | 0.05 | 0.05 | 0.05 | 0.05 | 0.05 |
| Rheologie der kond. Zementschlämme | | | | | | | | | | | | | |
| Fließgrenze, (lb/100ft²) | 51 | 12 | 26 | 6 | 5 | 16 | 6 | 12 | 7 | 11 | 9 | 8 | 9 |
| Plast. Viskosität (cP) | 279 | 22 | 99 | 75 | 39 | 31 | 87 | 70 | 119 | 99 | 133 | 89 | 85 |
| Wasserverlust, (ml) | 55 | 64 | 56 | 44 | 101 | 108 | 58 | 44 | 66 | 44 | 52 | 56 | 40 |

Die in Tabelle 4 angegebenen experimentellen Resultate zeigen, daß das erfindungsgemäße Copolymer als Zusatz in herkömmlichen wasserbasierenden Bohrflüssigkeiten auch bei einer hohen Temperatur von 375°F = 190°C sehr gute wasserverlustreduzierende Eigenschaften aufweist.

Tabelle 4

| | |
|---|---|
| Dichte | 1,9 kg/l |
| Wasser | Süßwasser |
| | |
| Copolymer | 0.56 Gew.-% |
| Bentonit (30 ppb) prehyd. | 1.12 Gew.-% |
| Tonstabilisator | 2.24 Gew.-% |
| Ligninsulfonat | 2.52 Gew.-% |
| sulfoniertes synthetisches Polymer | 1.4 Gew.-% |
| Monoethanolamin | 0.21 Gew.-% |
| Kaliumhydroxid | pH=10 |
| Lignosulfonat | 0.35 Gew.-% |
| Ton | 7 Gew.-% |
| Barit | bis 1,9 kg/l |
| Rheologie nach Temperaturalterung im Rollerofen (16 h bei 190°C, entsprechend 375°F): | |
| Fließgrenze (kg/100m$^2$) | 1.12 (entspr. 23lb/100ft$^2$) |
| plastische Viskosität (mPas) (cP) | 34 |
| 10 min Gelstärke | 40 |
| HTHP Wasserverlust bei190°C/3447,4 kPa(entspricht 375°F/500 psi) | 53 ml |

**Patentansprüche**

1. Copolymere mit einem k-Wert von 100 bis 300, gemessen in 0,5 Gew.-% Lösung in destilliertem Wasser, bestehend aus

   (a) 1 - 99 Gew.-% Struktureinheiten der Formel (1)

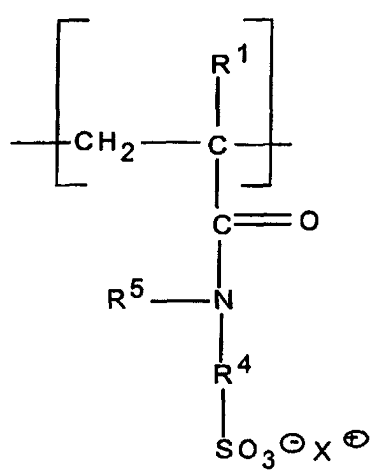

(1)

wobei $R^1$= Wasserstoff oder Methyl, $R^4$ = $C_1$ -$C_{22}$ Alkylen, $R^5$ = $C_1$-$C_{22}$-Alkyl oder Wasserstoff und X = Ammonium, Lithium, Natrium, Kalium, ein Amin oder ein Gemisch dieser Substanzen bedeuten und

(b) 99 - 1 Gew.-% Struktureinheiten der Formel (2)

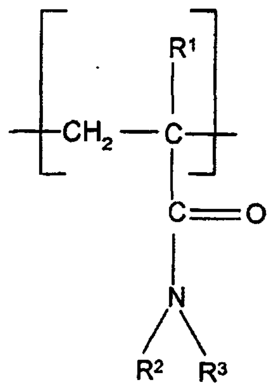

(2)

wobei $R^1$ = Wasserstoff oder Methyl, $R^2$ und $R^3$ unabhängig voneinander Wasserstoff oder $C_2$-$C_{22}$-Alkyl bedeuten, **dadurch gekennzeichnet, daß** Komponente b) nicht hydrolysiert ist, und daß die Copolymeren durch eine Lösungs-Fällungspolymerisation in einem nichtwässrigen Lösungsmittel oder einem wassermischbaren, organischen Lösungsmittel mit geringem Wassergehalt, welches ein Fällungsmittel für das Copolymer darstellt, hergestellt wurden.

**2.** Copolymere gemäß Anspruch 1 mit einem Molekulargewicht von 10.000 bis 10.000.000 g/mol.

**3.** Copolymere gemäß Anspruch 1 und/oder 2, wobei das Copolymer aus

(a) 90 -10 Gew.-% Einheiten der Formel (1) und
(b) 10 - 90 Gew.-% Einheiten der Formel (2) besteht.

**4.** Copolymere gemäß Anspruch 3, wobei das Copolymer aus

(a) 30 - 70 Gew.-% Einheiten der Formel (1) und
(b) 70 - 30 Gew.-% Einheiten der Formel (2) besteht.

**5.** Copolymere gemäß einem oder mehreren der Ansprüche 1 bis 4, wobei unabhängig voneinander die Reste in Formel (1) und Formel (2) folgende Bedeutung haben:

$X^+$=$NH_4^+$ oder $Na^+$,
$R^1$=H, $R^5$=H und $R^4$= $-C(CH_3)_2-CH_2-$,
$R^1$=$CH_3$, $R^5$=H und $R^4$= $-C(CH_3)_2-CH_2-$,
$R^1$, $R^2$ und $R^3$=H,
$R^1$ und $R^2$=H, $R^3$= $-C(CH_3)_3$,
$R^1$=$CH_3$, $R^2$ und $R^3$=H, oder
$R^1$ und $R^2$=H, $R^3$= $-C(CH_3)_3$.

**6.** Copolymere gemäß einem oder mehreren der Ansprüche 1 bis 5, **gekennzeichnet durch** einen k-Wert von 150 bis 270, gemessen in 0,5 Gew.-% Lösung in destilliertem Wasser.

**7.** Copolymere gemäß Anspruch 2 mit einem Molekulargewicht von 500.000 bis 5.000.000 g/mol.

**8.** Copolymere gemäß Anspruch 2 mit einem Molekulargewicht von 1000.000 bis 4.000.000 g/mol.

**9.** Copolymere gemäß einem oder mehreren der Ansprüche 1 bis 8, **gekennzeichnet durch** einen k-Wert von 180

bis 250, gemessen in 0,5 Gew.-% Lösung in destilliertem Wasser.

**10.** Verfahren zur Zementation von Tiefbohrungen unter Verwendung einer Zementschlämme, welche folgende Komponenten enthält:

a) Wasser unterschiedlicher Salinität
b) Zement
c) Copolymer gemäß einem oder mehreren der Ansprüche 1 bis 6 in einer Konzentration von 0,01 - 5 % bwoc (by weight of cement).

**11.** Verfahren gemäß Anspruch 10, worin die Konzentration der Komponente c) 0,05 bis 0,9 bwoc beträgt.

**12.** Verfahren gemäß Anspruch 10, **dadurch gekennzeichnet, daß** Dispergatoren, Verzögerer, Beschleuniger, Extender, Entschäumer oder Silikatderivate als Hilfsadditive verwendet werden.

**13.** Verwendung der Copolymere gemäß einem oder mehreren der Ansprüche 1 bis 9 in wasserbasierenden Bohrlochflüssigkeiten.

**Claims**

**1.** A copolymer having a k value of 100 to 300, measured in 0.5% by weight solution in distilled water, consisting of

(a) 1 - 99% by weight of structural units of the formula (1)

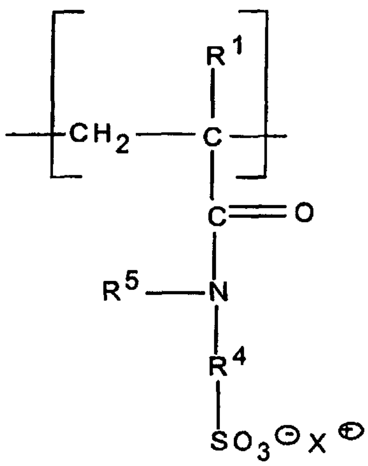

(1)

where $R^1$ is hydrogen or methyl, $R^4$ is $C_1$-$C_{22}$-alkylene, $R^5$ is $C_1$-$C_{22}$-alkyl or hydrogen, and X is ammonium, lithium, sodium, potassium, an amine or a mixture of these substances, and

(b) 99 - 1% by weight of structural units of the formula (2)

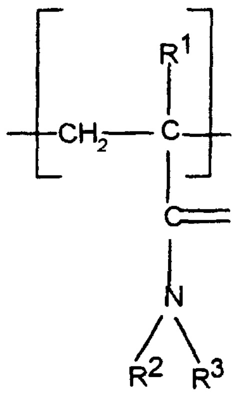

(2)

where $R^1$ is hydrogen or methyl, $R^2$ and $R^3$, independently of one another, are hydrogen, or $C_2$-$C_{22}$-alkyl,

wherein component b) is not hydrolyzed and the copolymers have been prepared by a solution precipitation polymerization in a nonaqueous solvent or a water-miscible, organic solvent having a low water content which is a precipitant for the copolymer.

**2.** A copolymer as claimed in claim 1, having a molecular weight of from 10,000 to 10,000,000 g/mol.

**3.** A copolymer as claimed in claim 1 and/or 2, which consists of

(a) 90 - 10% by weight of units of the formula (1) and
(b) 10 - 90% by weight of units of the formula (2).

**4.** A copolymer as claimed in claim 3, which consists of

(a) 30 - 70% by weight of units of the formula (1) and
(b) 70 - 30% by weight of units of the formula (2).

**5.** A copolymer as claimed in one or more of claims 1 to 4, where the radicals in the formula (1) and the formula (2) have the following meanings, independently of one another:

$X^+ = NH_4^+$ or $Na^+$,
$R^1$ = H, $R^5$ = H and $R^4 = -C(CH_3)_2-CH_2-$,
$R^1 = CH_3$, $R^5$ = H and $R^4 = -C(CH_3)_2-CH_2-$,
$R^1$, $R^2$ and $R^3$ = H,
$R^1$ and $R^2$ = H, $R^3 = -C(CH_3)_3$,
$R^1 = CH_3$, $R^2$ and $R^3$ = H, or
$R^1$ and $R^2$ = H, $R^3 = -C(CH_3)_3$.

**6.** A copolymer as claimed in one or more of claims 1 to 5, having a k value of from 150 to 270, measured in 0.5% by weight solution in distilled water.

**7.** A copolymer as claimed in claim 2, having a molecular weight of from 500,000 to 5,000,000 g/mol.

**8.** A copolymer as claimed in claim 2, having a molecular weight of from 1,000,000 to 4,000,000 g/mol.

**9.** A copolymer as claimed in one or more of claims 1 to 8, having a k value of from 180 to 250, measured in 0.5% by weight solution in distilled water.

**10.** A process for cementing subterranean wells using a cement slurry comprising the following components:

a) water of various salinity
b) cement

c) a copolymer as claimed in one or more of claims 1 to 6 in a concentration of 0.01 - 5% bwoc (by weight of cement).

**11.** The process as claimed in claim 10, where the concentration of component c) is 0.05 to 0.9 bwoc.

**12.** The process as claimed in claim 10, wherein dispersants, retardants, accelerators, extenders, antifoams or silicate derivatives are used as auxiliary additives.

**13.** The use of a copolymer as claimed in one or more of claims 1 to 9 in water-based drilling fluids.

**Revendications**

**1.** Copolymères avec un indice k de 100 à 300, mesuré dans une solution à 0,5 % en poids dans l'eau distillée, constitués de

(a) 1-99 % en poids de motifs de structure de formule (1)

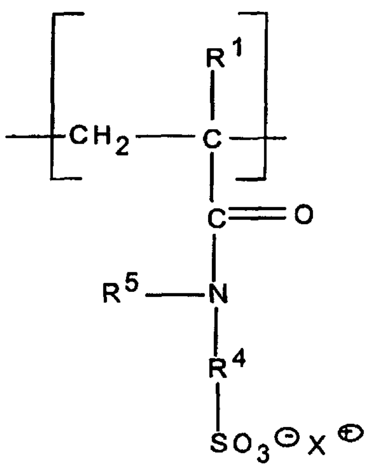

(1)

dans laquelle $R^1$ = un hydrogène ou méthyle, $R^4$ = un groupe alkylène en $C_1$-$C_{22}$, $R^5$ = un groupe alkyle en $C_1$ à $C_{22}$ ou un hydrogène et X = un ammoniun, lithium, sodium, potassium, une amine ou un mélange de ces substances et
(b) 99-1 % en poids de motifs de structure de formule (2)

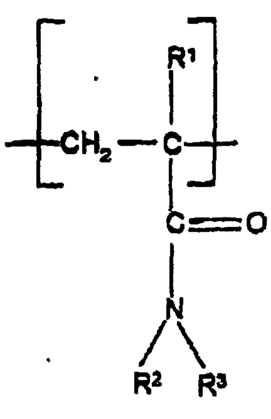

(2)

dans laquelle $R^1$ = un hydrogène ou méthyle, $R^2$ et $R^3$ représentent, indépendamment l'un de l'autre, un hydrogène ou un groupe alkyle en $C_1$ à $C_{22}$, **caractérisés en ce que** le composant b) n'est pas hydrolyse, et **en ce que** les

copolymères ont été préparés par une polymérisation par précipitation en solution dans un solvant non aqueux ou un solvant organique, miscible à l'eau, avec une faible concentration en eau, qui représente un milieu de précipitation pour le copolymère.

**2.** Copolymères selon la revendication 1 avec une masse moléculaire de 10 000 à 10 000 000 g/mol.

**3.** Copolymères selon la revendication 1 et/ou 2, dans lesquels le copolymère est constitué de

(a) 90-10-% en poids de motifs de formule (1) et
(b) 10-90 % en poids de motifs de formule (2).

**4.** Copolymères selon la revendication 3, dans lesquels le copclymère est constitué de

(a) 30-70 % en poids de motifs de formule (1) et
(b) 70-30 % en poids de motifs de formule (2).

**5.** Copolymères selon une ou plusieurs des revendications 1 à 4, dans lesquels, indépendamment les uns des autres, les groupes de la formule (1) et de la formule (2) ont la signification suivante :

$X^+ = NH_4^+$ ou $Na^+$,
$R^1 = H$, $R^5 = H$ et $R^4 = -C(CH_3)_2-CH_2-$,
$R^1 = CH_3$, $R^5 = H$ et $R^4 = -C(CH_3)_2-CH_2-$,
$R^1$, $R^2$ et $R^3 = H$,
$R^1$ et $R^2 = H$, $R^3 = -C(CH_3)_3$,
$R^1 = CH_3$, $R^3$ et $R^3 = H$, ou
$R^1$ et $R^2 = H$, $R^3 = -C(CH_3)_3$.

**6.** Copolymères selon une ou plusieurs des revendications 1 à 5, **caractérisés par** un indice k de 150 à 270, mesuré dans une solution à 0,5 % en poids dans l'eau distillée.

**7.** Copolymères selon la revendication 2 avec une masse moléculaire de 500 000 à 5 000 000 g/mol.

**8.** Copolymères selon la revendication 2 avec une masse moléculaire de 1 000 000 à 4 000 000 g/mol.

**9.** Copolymères selon une ou plusieurs des revendications 1 à 8, **caractérisés par** un indice k de 180 à 250, mesuré dans une solution à 0,5 % en poids dans l'eau distillée.

**10.** Procédé pour la cémentation de sondages en utilisant une boue de ciment, qui contient les composants suivants :

a) de l'eau d'une salinité différente
b) du ciment
c) un copolymère selon une ou plusieurs des revendications 1 à 6 à une concentration de 0,01-5 % en poids de ciment (bwoc).

**11.** Procédé selon la revendication 10, dans lequel la concentration du composant c) est de 0,05 à 0,9 bwoc.

**12.** Procédé selon la revendication 10, **caractérisé en ce qu'**on utilise des agents dispersants, des retardateurs de prise, des accélérateurs, des diluants, des agents antimousse ou des dérivés de silicate comme adjuvants.

**13.** Utilisation des copolymères selon une ou plusieurs dès revendications 1 à 9 dans des liquides de forure à base d'eau.